# EUROPEAN PATENT SPECIFICATION

(11) **EP 4 477 877 B1**
(45) Date of publication and mention of the grant of the patent: **15.04.2026**
(21) Application number: 23382591.8
(22) Date of filing: 14.06.2023
(51) Int. Cl.: F03D 13/10, F03D 13/25

(54) **METHOD FOR THE MAINTENANCE AND/OR INSTALLATION OF FLOATING-TYPE OFFSHORE WIND TURBINE TOWERS**
VERFAHREN ZUR WARTUNG UND/ODER INSTALLATION VON SCHWIMMENDEN OFFSHORE-WINDTURBINENTÜRMEN
PROCÉDÉ DE MAINTENANCE ET/OU D'INSTALLATION DE TOURS ÉOLIENNES EN MER DE TYPE FLOTTANT

(43) Date of publication of application: 18.12.2024
(73) Proprietor: SOLVE WIND SERVICES SL, 48014 Bilbao, Vizcaya (ES)
(72) Inventor: SERNA GARCÍA-CONDE, José Salustiano, 28036 Madrid (ES); GARCÍA ACÓN, Carlos, 28036 Madrid (ES); SARRASÍN GÓMEZ, David, 28036 Madrid (ES)
(74) Representative: TRBL Intellectual Property

(56) References cited:
- EP-B1- 1 492 699
- DK-B1- 181 087
- US-A1- 2022 316 446

## Description

### FIELD OF THE INVENTION

The present invention mainly relates to a method for the maintenance of offshore structures and, preferably, for the maintenance of offshore wind turbine towers floating-type. The main sector of application of the invention is, therefore, the civil construction industry combined with the renewable or green energy industry, more specifically of offshore wind energy.

### BACKGROUND OF THE INVENTION

In the offshore wind energy sector, wind turbine maintenance tasks commonly known as "major corrective" maintenance tasks are of great economic importance and significance, in which it is necessary to have a crane for taking heavy components of the wind generator that are at a great height around 100 meters or more up or down.

At present, said "major corrective" operations for offshore wind turbines with a fixed foundation on the seabed have been performed almost exclusively by means of jack-up vessels, which are ships equipped with legs that can be supported on the seabed to lift the hull of the vessel out of the water. The crane incorporated in the vessel itself can thereby work without being affected by the movement of the sea. However, these vessels cannot operate on floating wind turbines for two reasons: on one hand, the inevitable movement of the floating wind turbine prevents the crane from operating, and on the other hand, water depths at the sites in which floating wind turbines are used do not allow the legs of jack-up vessels to reach the seabed.

A possible solution to this problem is to use systems which allow being actively coupled to the shaft of the wind turbine tower on which maintenance tasks are to be performed through active locking mechanisms based primarily on clamping means (see, for example, patent application ES 2796978 A1, which describes in detail a system of this type). Therefore, the auxiliary maintenance system, once coupled by means of the active locking thereof, moves integrally with the wind turbine, preventing relative movements between the vessel supporting the maintenance crane and the offshore structure supporting the wind turbine. This allows the operation of the crane to be used for maintenance tasks. However, a solution of this type is only applicable in floating structures which have a shaft-type element to which it can be coupled, and there are floating solutions that do not have a shaft-type element suitable for a coupling.

Other known solutions, like those disclosed in patents and patent applications DK 181087 B1 and US 2022/316446 A1 (and also marginally in European patent EP1492699B1), rely on using semisubmersible systems that are designed to sink below floating marine structures for posteriorly elevating them in order to perform the "major corrective" maintenance tasks. However, these solutions imply maneuvering with the auxiliary systems in complicated, time-consuming ways at offshore locations (with the corresponding challenging sea and wind conditions) until they are correctly positioned under the floating structures.

Therefore, in the present technical field it is necessary to develop alternative maintenance methods which are particularly appropriate for floating offshore structures, and which do not require complicated maneuvering for being correctly and safely arranged at their operating position.

The present invention is intended for said need by means of a novel method devised especially for the maintenance of floating-type offshore wind turbine towers, and it does not require active clamping means for the clamping thereof on the shaft of said towers.

### BRIEF DESCRIPTION OF THE INVENTION

To overcome the limitations of the state of the art described above, the object of the present invention is to provide a method for the maintenance of offshore structures, such as wind turbine towers, said offshore structures being of the floating type. Said method mainly comprises different operating steps of an auxiliary vessel which can be of the self-ballasting type, and wherein said system allows optimizing the mentioned maintenance operations with respect to known systems.

More specifically, a first object of the invention relates to a method of maintenance and/or installation of an offshore structure, wherein said offshore structure is of the floating type and comprises a completely or partially submerged hull, and wherein said method comprises the operation of an auxiliary vessel which in turn comprises:
- one or more floating elements;
- a working platform positioned on at least one of said floating elements;
- maintenance and/or installation means for the offshore structure; and
- at least three points selected from bearing points on the offshore structure and hanging points from the offshore structure.

Advantageously, the method of the invention comprises, specifically, performing at least the following steps:
a) selecting at least three support points on the hull of the offshore structure;
b) transferring the auxiliary vessel, in a floating manner, to the site where the offshore structure is located;
c) positioning at least part of the auxiliary vessel in the substantially vertical projection of at least part of the support points of the hull;
d) reducing the relative vertical distance between the hull and the auxiliary vessel until:
   - at least part of the bearing points are borne on at least part of the support points, and/or
   - at least part of the hanging points are suspended from at least part of the support points;
e) increasing the contact and/or suspension force that the auxiliary vessel exerts on said support points until the downward vertical load that the auxiliary vessel applies on the hull reaches, on a ten-minute average, a value greater than 10 tons and the auxiliary vessel and the hull are coupled and move together in an integral manner in all degrees of freedom;
f) using the maintenance and/or installation means to act on the offshore structure;
g) increasing the relative vertical distance between the hull and the auxiliary vessel until the auxiliary vessel stops transmitting a load at the support points and the auxiliary vessel and the hull stop moving together in an integral manner;
h) moving the auxiliary vessel, in a floating manner, away from the site where the offshore structure is located.

In the scope of the invention, the bearing points on the offshore structure and the hanging points from the offshore structure are considered equivalent in terms of the object of the invention, in the sense that they both represent points of contact between the auxiliary vessel and the offshore structure, suitable for the transmission of loads between both, such that both structures can be coupled to the increase in contact force that the auxiliary vessel exerts on said points. However, in particular embodiments, related, for example, to the form of the offshore structure or the situation thereof, it may be more appropriate to use some of them other ones, or a combination of both.

In a preferred embodiment of the method of the invention, the maximum horizontal distance existing between the bearing points and/or between the hanging points is more than 3 meters. In the same way, the maximum horizontal distance between support points is also greater than the 3 meters.

In another preferred embodiment of the invention, the hull comprises one or more ballasting tanks, and wherein step d) comprises removing ballast from said tanks to reduce the draft of the hull; and/or wherein step e) comprises removing ballast from said tanks to increase the vertical force that the auxiliary vessel exerts on the hull; and/or wherein step g) comprises introducing ballast in said tanks to increase the draft of the hull.

In another preferred embodiment of the invention, the momentum generated by the weight of the ballast removed from the ballasting tanks of the hull during steps d) and e) is essentially equal to the momentum caused by the vertical load that the auxiliary vessel applies on the hull in step e), which allows preventing or reducing the heeling that the weight of the auxiliary vessel causes on the offshore structure when coupled to the hull thereof. The tilting that the bearing weight of the auxiliary vessel may cause on the offshore structure is thereby reduced.

In another preferred embodiment of the invention, the auxiliary vessel comprises one or more ballasting tanks, and wherein step d) comprises introducing ballast in said tanks to increase the draft of the auxiliary vessel; and/or wherein step g) comprises removing ballast from said tanks to reduce the draft of the auxiliary vessel.

In another preferred embodiment of the invention, the auxiliary vessel comprises a single floating element in the form of a barge in which both the maintenance, installation and/or repair means for the offshore structure and the working area are arranged, and wherein said barge is made up of a single body or of the attachment of several modules which are connected to one another.

In another preferred embodiment of the invention, at least part of the hanging points of the auxiliary vessel comprise hoisting means, such that step d) comprises acting on said hoisting means to reduce the draft of the auxiliary vessel; and/or step g) comprises acting on said hoisting means to increase the draft of the auxiliary vessel.

In another preferred embodiment of the invention, step d) comprises acting on the hoisting means to take completely out of the water at least part of the floating elements of the auxiliary vessel; and/or step g) comprises acting on the hoisting means to introduce in the water at least part of the floating elements of the auxiliary vessel.

In another preferred embodiment of the invention, the floating elements of the auxiliary vessel form a semisubmersible hull comprising three or more vertical columns interconnected to one another which go through the waterline such that the upper part of the column remains emerged, and the lower part of the column remains submerged.

In another preferred embodiment of the invention, steps b) and/or h) comprise transporting on the working platform of the auxiliary vessel one or more components of the offshore structure, and the floating elements of the auxiliary vessel provide sufficient stability while afloat to withstand the weight of said components positioned on the working platform.

In another preferred embodiment of the invention, the maintenance and/or installation means comprise a crane supported at least temporarily on the auxiliary vessel. Part of the components of said crane can provisionally be installed on the offshore structure to carry out the installation and/or maintenance tasks. Likewise, the crane can be a fixed or mobile tracked or wheeled land crane, as well as a telescopic- and/or folding-type crane, being deployed during step f) and folded up prior to step g). This reinforces the stability of the auxiliary vessel during the approach and departure phases, since the surface of the crane exposed to wind and other adverse conditions is much less than with the crane deployed or than with a crane that is not a of the telescopic type. Moreover, the maintenance means can comprise a mobile land crane comprising only an upper body with at least one jib, counterweights and the operating equipment of the crane. The total weight transported is thereby lower, thus saving in costs.

In another preferred embodiment of the invention, the ballasting tanks of the hull of the offshore structure and of the auxiliary vessel comprise one or more adjustable opening and/or remotely operated hatches, and/or one or more pumps for removing or introducing water. Said ballasting tanks can be operated asymmetrically, such that they balance the weight of the auxiliary vessel transmitted on the offshore structure during steps e) and f), so that the latter is maintained with a substantially vertical orientation, providing the entire assembly with greater stability against the waves or the wind.

In another preferred embodiment of the invention, at least one bearing point and/or support point comprise securing means to form a mechanical fixing between said bearing point and said support point. The method further comprises, after step d) and before step f), step:
e1) engaging said securing means to form a mechanical fixing between said bearing point and said support point such that both of them cannot be separated; and, furthermore, before step g), step:
e2) disengaging said securing means to allow the separation of said bearing point and said support point.

In another preferred embodiment of the invention, at least one support point of the hull has a vertical axis frustoconical convex male geometry, and the bearing point of the auxiliary vessel supported on said support point has a concave female geometry, or vice versa, and:
- during step d) the frustoconical matching geometry of said support point or points and bearing point or points allows guiding the plan position of the auxiliary vessel with respect to the hull;
- during steps e) and/or f) the matched geometry of the contact between said support point or points and bearing point or points allows the transmission of horizontal forces between the auxiliary vessel and the hull by direct contact.

In another preferred embodiment of the invention, steps b) and/or h) are performed by means of towing of the auxiliary vessel, or by means of a self-driven transport of said vessel.

In another preferred embodiment of the invention, the auxiliary vessel is equipped with one or more cushioning means or fender which are arranged, during one or more of steps c)-g), between said auxiliary vessel and the hull of the offshore structure. Said means prevent the structures involved in the method from suffering damages due to possible collisions or friction.

In another preferred embodiment of the invention, the auxiliary vessel comprises at least one winch, and step c) comprises the following sub-steps:
c1) connecting at least one cable of said winch to the offshore structure;
c2) using the winch to take up the cable or cables such that the auxiliary vessel gradually approaches the hull.

In another preferred embodiment of the invention, step c) further comprises the following sub-steps:
c3) the auxiliary vessel approaching the hull until at least part of the cushioning means or fender contact the hull;
c4) taking up the cable or cables with the winch to increase the compression applied on at least part of the cushioning means or fender positioned between the hull and the auxiliary vessel.

In another preferred embodiment of the invention, during step c2) a second vessel is used to pull on the auxiliary vessel in the direction opposite to the direction in which said auxiliary vessel approaches the hull, keeping at least part of the cable(s) of the winch tensed during at least part of the approach process. Said second vessel is preferably a tugboat, although any other type of vessel capable of exerting a pulling force on the auxiliary vessel can be used.

In another preferred embodiment of the invention, at least one bearing point of the auxiliary vessel comprises a pneumatic fender and step d) comprises the following sub-steps:
d1) inflating said pneumatic fender;
d2) said bearing point vertically approaching a support point of the hull until the pneumatic fender contacts said support point;
d3) compressing and/or deflating said pneumatic fender with the bearing point continuing to approach the support point in a controlled manner as the dimension of said pneumatic fender decreases.

The use of a pneumatic fender in this embodiment of the invention is preferred as it allows high levels of compressibility, but non-pneumatic and sufficiently flexible and/or compressible fenders of another type can also be used. In that case, steps d2) and d3) would be maintained while step d1) would be dispensed with.

In the scope of the invention, the term "floating-type offshore construction" shall be interpreted to mean any structure which can be installed or deployed in an offshore environment, and which can float by itself, either self-stabilized or assisted by auxiliary means of connection, such as mooring cables, either to the seabed or to other structures.

Likewise, the term "submerged" applied to an element shall be interpreted to mean a condition in which the entire volume of said element remains below the waterline, and additionally, the term "semisubmerged" shall be interpreted to mean a condition in which a part of the volume of said element remains below the waterline.

Moreover, in the scope of the present invention the expressions "bearing point", "hanging point" and "support point" shall be interpreted to mean bearing, hanging or support regions, respectively, and, therefore, they may also comprise bearing, hanging or support points, as well as bearing, hanging or support surfaces or volumes.

Finally, in the scope of the invention, the expression "substantially" shall be interpreted to mean identical or comprised within a range of variation of 30%, and more preferably 15%.

### DESCRIPTION OF THE DRAWINGS

The above and other features and advantages will be more fully understood based on the detailed description of the invention, as well as the preferred embodiments referring to the attached drawings, in which:
- Figure 1 schematically corresponds to the first steps of the method of the invention, in which the auxiliary vessel, provided with a folded crane, is headed towards the offshore structure.
- Figure 2 schematically corresponds to the second steps of the method of the invention, in which the relative vertical distance between the hull of the offshore structure and the auxiliary vessel decreases.
- Figure 3 schematically corresponds to the third steps of the method of the invention, in which the auxiliary vessel is entirely borne or hanging on/from the hull of the offshore structure, making it possible to perform the relevant maintenance tasks by means of a deployed crane.
- Figure 4 illustrates a top view of the auxiliary vessel together with the offshore structure, once the former is fully borne on the latter for performing maintenance operations on the offshore structure, according to the embodiment shown in Figures 1-3.
- Figure 5 shows a view of the auxiliary vessel together with the offshore structure once the former is fully borne/hanging on/from the latter for performing maintenance operations on the offshore structure according to an embodiment of the method of the invention.
- Figure 6 shows a view of the auxiliary vessel together with the offshore structure once the former is fully borne/hanging on/from the latter for performing maintenance operations on the offshore structure according to an embodiment of the method of the invention.
- Figure 7 illustrates two views, an elevational view and a plan view, of the auxiliary vessel together with the offshore structure, once the former is fully borne on the latter for performing maintenance operations on the offshore structure according to two embodiments of the method of the invention shown in Figures 5-6.
- Figure 8 shows one of the intermediate steps of the method of the invention; more specifically, it shows the embodiment of the maintenance tasks of the offshore structure by means of the operation of a crane assembled on said offshore structure once the auxiliary vessel is fully borne on the offshore structure.

### List of reference number in the figures:

| | |
|---|---|
| (1) | Offshore structure |
| (2) | Wind turbine |
| (3) | Hull of the offshore structure |
| (4) | Tower or shaft |
| (5) | Waterline |
| (6) | Ballasting tanks of the hull of the offshore structure |
| (7) | Auxiliary vessel |
| (8) | Floating element of the auxiliary vessel |
| (9) | Ballasting tanks of the auxiliary vessel |
| (10) | Working platform of the auxiliary vessel |
| (11) | Maintenance and/or installation means for the offshore structure |
| (11') | Crane for maintenance and/or installation of the offshore structure |
| (12) | Cushioning means or fender of the auxiliary vessel |
| (12') | Pneumatic fender at the bearing points |
| (13) | Bearing points of the auxiliary vessel |
| (13') | Hanging points of the auxiliary vessel |
| (14) | Support points of the hull of the offshore structure |
| (15) | Securing means for securing the auxiliary vessel to the offshore structure |
| (16) | Hoisting means |
| (17) | Winch |

### DETAILED DESCRIPTION OF THE INVENTION

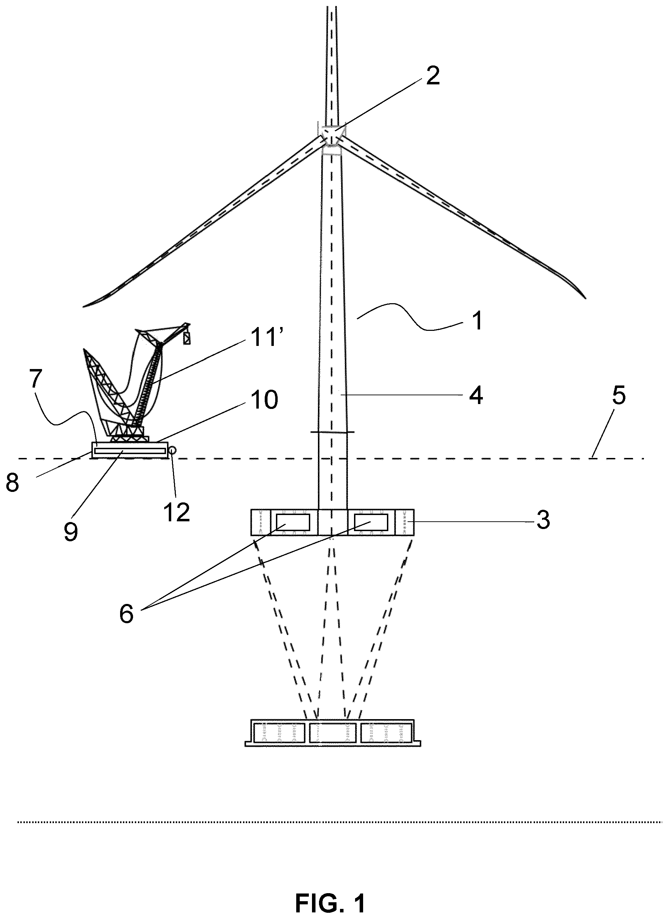

A detailed description of the invention is set forth below based on Figures 1-8 of the present document. Said description is provided for the purpose of illustrating, but not to limit, the claimed invention.

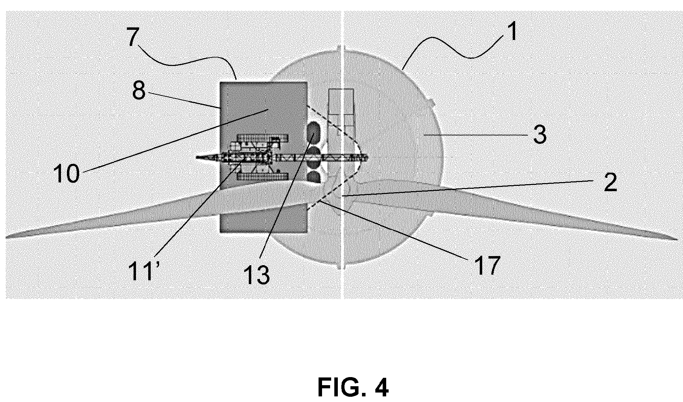

Figures 1-4 illustrate different elevational views (Figures 1-3) and plan view (Figure 4) of an offshore structure (1), preferably corresponding to an offshore tower-type wind turbine structure (2), further comprising a hull (3) the internal shape and volume of which are adapted for providing the assembly of said offshore structure (1) with floatability. While in a preferred embodiment of the invention, the hull (3) is arranged in a lower portion of the offshore structure (1), in other embodiments it can be arranged in other positions (for example, in an intermediate region of the tower (4) of the wind turbine (2), or forming an integral part thereof), such that when the offshore structure (1) is floating it is operating condition, the hull (3) remains submerged (that is, its entire volume is below the waterline (5)) or semisubmerged. Likewise, the hull (3) of the offshore structure (1) comprises one or more ballasting tanks (6), adapted for housing a corresponding ballasting material (for example, water) therein, which allows adjusting the operating depth (draft) of said hull (3) and, therefore, of the assembly of the offshore structure (1). Techniques for adjusting ballast in ballasting tanks (6) of vessels and, in general, of offshore structures (1) are known in the state of the art and can be based on hydraulic pumps, valves, pipes, as well as any piping, housing, and driving means for the ballast material used, both to empty the tanks (6) and to fill them.

Figures 1-3 show a particular typology of offshore structure (1) further comprising a stabilizing element suspended from the hull (3) of said structure (1), for example, by means of cables. The stabilizing element contributes to lowering the center of gravity of the offshore structure (1), increasing its stability, although the method of the present invention can naturally be applicable to any other typology of offshore structure (1).

In other alternative embodiments of the invention (not shown in the figures), the hull (3) of the offshore structure (1) can be moored to the seabed, for example, by means of one or more mooring lines of a fixed or adjustable length, through the corresponding adjustment means. In the embodiments in which the length of the mooring lines is adjustable, it also allows modifying the operating depth (draft) of the offshore structure (1). Therefore, in said alternative embodiments, the hull (3) of the offshore structure (1) may or may not be susceptible to ballasting, with the use of the corresponding filling/emptying tanks (6) being optional.

Preferably, the offshore structure (1) and the hull (3) are manufactured, at least partially, with concrete and/or steel, although other materials are also likewise usable in the scope of the invention.

Additionally, to carry out the method of the invention, it is necessary to use an auxiliary vessel (7) intended for transporting operators and/or the equipment necessary to perform installation or maintenance tasks on the offshore structure (1). In this embodiment, the auxiliary vessel (7) comprises a floating element (8) in the form of a barge, although in other embodiments it can comprise several floating elements (8), for example, vessels (7) of the catamaran, trimaran, semisubmersible type, etc. In alternative embodiments of the invention, one or more of the floating elements (8) of the vessel (7) can be of the type susceptible to ballasting (for example, comprising one or more corresponding intake/discharge ballast tanks (9)), adapted with ballast adjustment means which allow controlling the buoyancy level of the vessel (7) by means of adjusting the volume of water between the inside of the ballasting tanks (9) of the auxiliary vessel.

The ballast adjustment means of the auxiliary vessel (7) preferably comprise adjustable opening and/or remotely operated hatches, and/or pumps for removing or introducing water, or other components known in the art and commonly used in ballast adjustment or transfer systems in various types of vessels. Furthermore, to offset the vertical load transmitted by the auxiliary vessel (7) to the hull (3), the ballasting tanks (6) of the hull (3) of the offshore structure (1) will preferably comprise a mechanism for transferring water to the tank of the part of the hull (3) opposite to the one used for the bearing of the auxiliary vessel (7).

Said floating elements (8) can be manufactured using different materials known in the art. The configuration of the floating elements (8) can also be modulated to enable adjusting their overall size. The parts or modules that can be used to form said floating elements (8) can adopt various shapes, with their dimensions preferably being able to fit in a container (the same as or not larger than those of a standard container) to facilitate transport and reuse. Said modules can be attached to one another to form a floating element (8) both in plan position and in height.

In order to perform installation or maintenance tasks on the offshore structure (1), the auxiliary vessel preferably comprises at least one working platform (10) intended for supporting both the work team and the corresponding equipment, and maintenance and/or installation means (11) of the offshore structure which in turn can comprise a fixed or deployable crane (11') (for example of the telescopic type), configurable in height to perform maintenance or installation tasks on the wind turbine (2) of the offshore structure (1). The working platform (10) is preferably used for the stockpiling and/or repair of components of the offshore structure (1) (for example, components of a turbine or blades of a wind turbine (2)). In different embodiments of the invention, said working platform (10) can be an elevated and/or exempt area with respect to the floating elements (8). Likewise, the maintenance and/or installation means (11) of the offshore structure can be positioned both on the working platform and on one or more floating elements (8), or they can even be installed temporarily on the offshore structure (1), depending on the step of the method that is being carried out.

In another preferred embodiment of the invention, the crane (11') is a mobile land crane (11') and is equipped with an upper body formed by at least one jib, counterweights and the operating equipment of the crane (11'), and an upper body comprising the means for the displacement of the crane (11') by means of wheels and/or tracks. In a more preferred embodiment of the invention, the auxiliary vessel (7) comprises only said upper body of the crane (11') (the weight thereof is thereby reduced). Furthermore, it is possible to dispense with the lower body because during the method for maintenance the crane (11') does not need to be moved. In this embodiment, the auxiliary vessel (7) must comprise anchoring means for the connection of said upper body of the crane (11').

According to the configuration described, the auxiliary vessel (7) can be towed or displaced with its own means (in a self-driven manner) to the offshore structure (1) on which installation or maintenance tasks are to be performed. Likewise, for the purpose of facilitating the coupling to the mentioned offshore structure (1), the vessel (7) can be equipped with cushioning means (12) or an impact fender configured to be placed between the vessel (7) and the offshore structure (1) during the approach or departure phases close to the coupling between both, preventing the possible corresponding collisions and damages therein. Said cushioning means (12) or fender can comprise, for example, inflatable elements such as pneumatic fenders and/or elastic elements, for example, made of a plastic material provided with significant flexibility and, accordingly, with the capacity to absorb or dissipate the impact energy from a collision between the vessel (7) and the offshore structure (1).

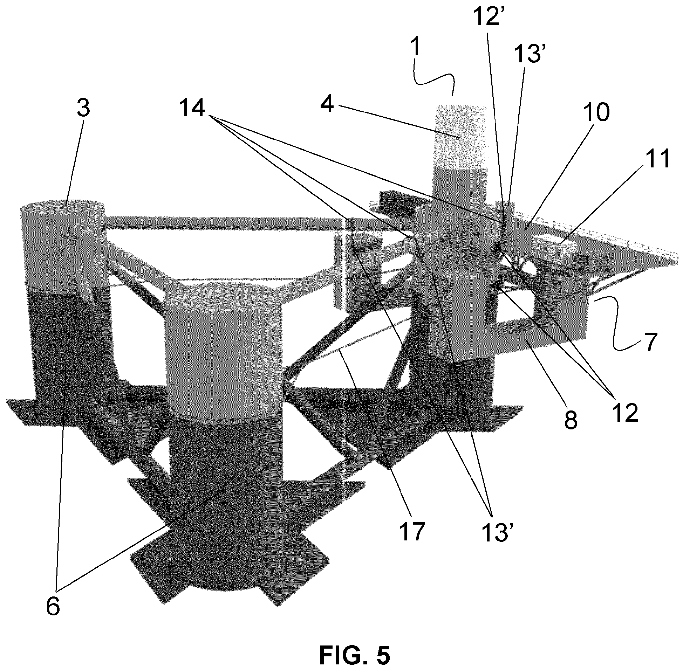

Figures 5-6 refer to another preferred embodiment of the invention in which the offshore structure (1) is a semisubmersible float comprising three round columns, and the auxiliary vessel (7) also comprises a semisubmersible hull with 4 square columns. Said auxiliary vessel (7) comprises two bearing points (13) and two hanging points (13'). However, in other embodiments of the invention, it is possible to adopt various configurations based on the combination of bearing points (13) and hanging points (13'). Thus, in an embodiment of the invention, the auxiliary vessel (7) can comprise three bearing points (13), in another one three hanging points (13'), in another one two bearing points (13) and one hanging point (13'), etc. Likewise, this embodiment of the invention involves the preparation of at least three support points (14) in the hull (3) of the offshore structure (1), which can be performed as part of each maintenance/installation operation on the offshore structure (1), or else entirely or partially during the process of manufacturing the hull (3).

The bearing/hanging points (13/13') are adapted to be borne/hang on/from the support points (14) such that the auxiliary vessel (7) can be mechanically coupled to the hull (3) of the offshore structure (1), with both structures moving together integrally after said coupling. Furthermore, in a preferred embodiment of the invention the bearing and/or hanging points (13, 13') are horizontally separated from one another by a distance of at least 3 meters, just like the support points (14), which ensures, for the usual dimensions of offshore structures (1) involved in methods of this type, sufficient stability to keep both bodies coupled while performing maintenance and/or installation tasks. Moreover, the bearing and support points (13, 14) can comprise complementary shapes or geometries in order to ensure a better coupling between both and/or securing means (15), such as braces, screws, pins, anchorings, magnets, suction cups or other means known in the art to form a mechanical fixing between both, providing the coupling with greater stability and safety. The hanging points (13') described can additionally comprise hoisting means (16) which can be acted on to increase or decrease the tension therein, such that the auxiliary vessel (7) decreases or increases its distance vertical with respect to the hull (3) of the offshore structure (1). Said hoisting means can comprise winch, pulley, rack, rack and pinion systems or any other system known in the art.

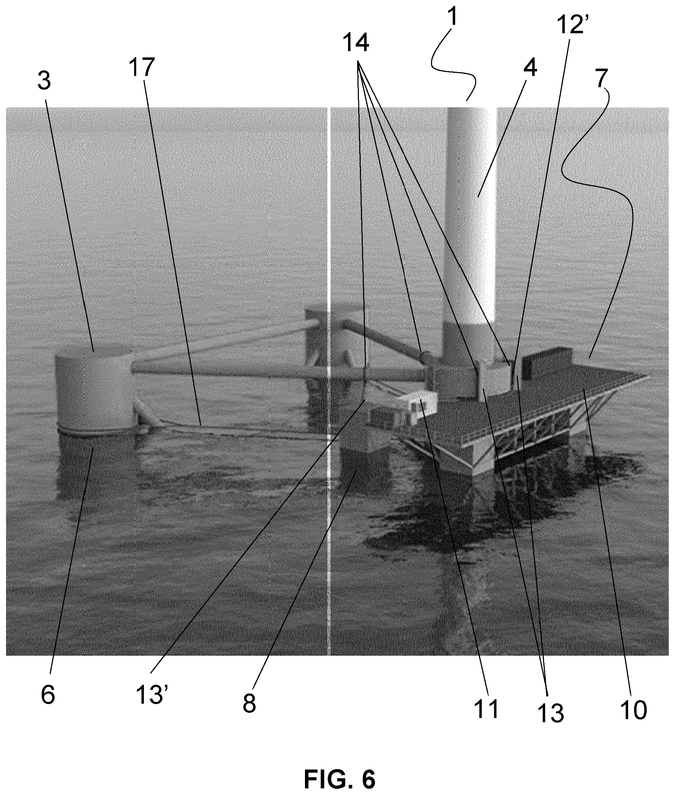

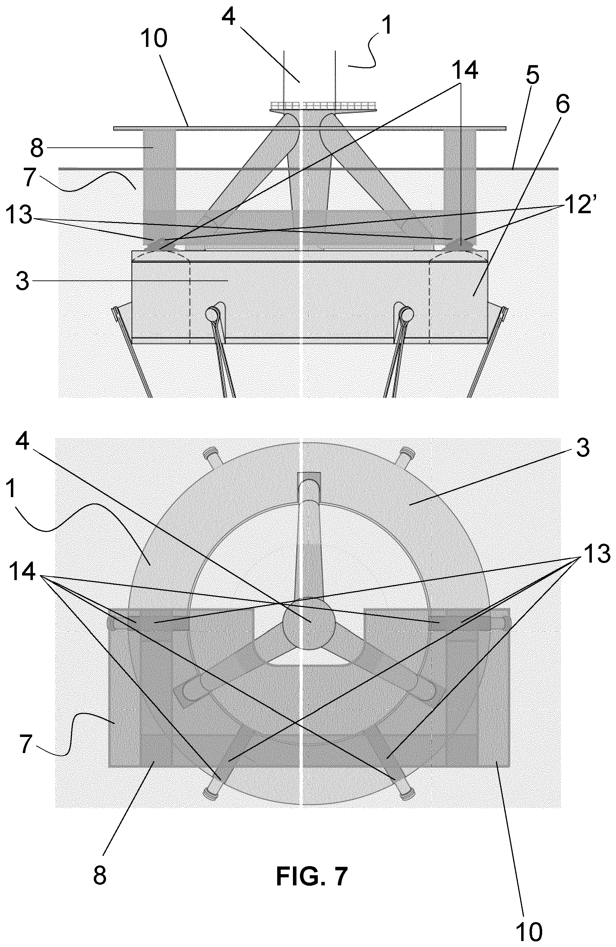

In the preferred embodiment shown in Figures 5 and 6, as well as another preferred embodiment shown in Figure 7, the floating elements (8) of the auxiliary vessel (7) form a semisubmersible hull comprising three or more vertical columns interconnected to one another which go through the waterline (5) such that the upper part of the column remains emerged and the lower part of the column remains submerged. This configuration allows providing significant stability to the auxiliary vessel (7) while at the same time limiting the flotation area and the movements thereof, which facilitates the adjustment of the draft and the approach process for the coupling with the offshore structure (1).

Figures 1-3 also show different steps of the method of installation and/or maintenance of the invention according to a preferred embodiment thereof.

As shown in Figure 1, the auxiliary vessel (7) is headed (as mentioned, by means of a tugboat, by self-propulsion, etc.) to the proximity vicinity of the offshore structure (1) (specifically, an offshore wind turbine (2) with a tower (4)).

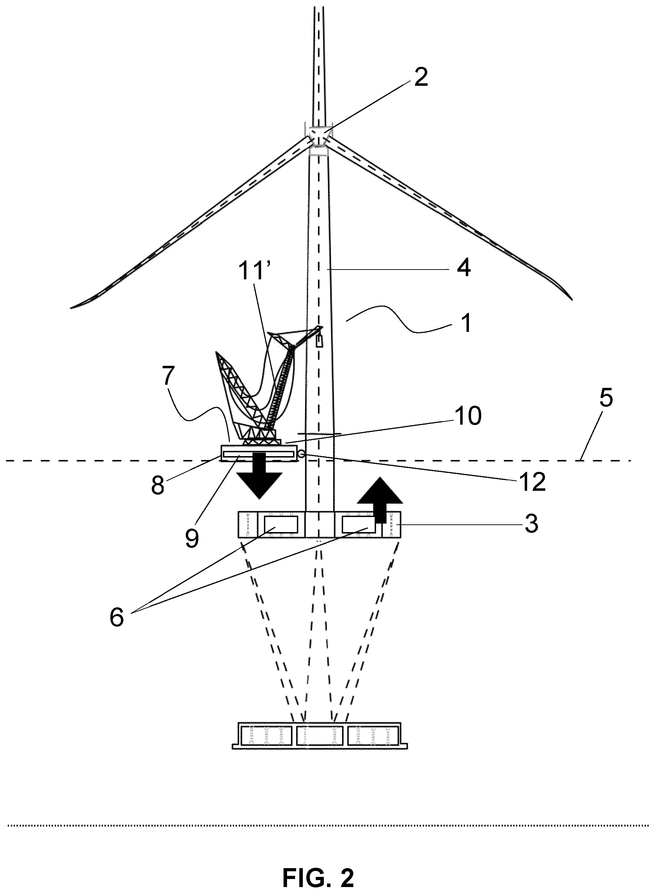

Then, as can be seen schematically in Figure 2, the approach with respect to the offshore structure (1) ends, for example, when the cushioning means (12) of the auxiliary vessel (7) contact the structure (1), or when the auxiliary vessel (7) is located at a distance close enough thereto so as to safely perform maintenance or installation tasks. In a preferred embodiment of the invention, the approach is performed by using a winch (17) comprised in the auxiliary vessel (7) to take up one or more cables of said winch (17) once connected to the offshore structure (1), such that the horizontal distance between both elements is reduced. Figure 5 shows said winches (17) once the auxiliary vessel (7) is already coupled to the offshore structure (1). Said winches can be using during the approach process until the fenders (12) of the auxiliary vessel (7) contact the hull (3) of the offshore structure (1), and also after said first contact, to exert and/or maintain pressure on said fenders (12) and thereby reduce or limit the relative movements between the auxiliary vessel (7) and the offshore structure (1) during steps d) and/or e).

In another preferred embodiment of the invention, additionally, used at the end of the approach is a pneumatic fender (12') comprised at the bearing points (13) of the auxiliary vessel (7) which, once in contact with the support points (14) the offshore structure (1) is compressed or deflated in a controlled manner to gradually approach the surfaces of the bearing points (13) of the auxiliary vessel (7) and of the support points (14) of the offshore structure (1). As an alternative to a pneumatic fender, other very compressible fender elements known in the art can be used.

Once the approach is completed, the lower horizontal surface of the floating element (8) of the auxiliary vessel (7) is contained substantially in the vertical projection of the upper horizontal surface of the hull (3). More specifically, at least one of the bearing or hanging points (14, 14') of the auxiliary vessel (7) is contained substantially in the vertical projection of at least one support point (14) of the hull. In this way, and as described below, when the buoyancy level of the hull (3) is made to rise sufficiently, at least part of the bearing (hanging) points (14, 14') will be in contact (suspended) with (from) at least part of the support points (14). For this purpose and once the approach phase has been completed, the buoyancy level of the hull (3) of the offshore structure (1) is adjusted in order to raise its operating depth. Optionally, in the embodiments in which the auxiliary vessel (7) is also of the type susceptible to ballasting, it is possible to adjust the ballast thereof simultaneously in order to cause the lowering of its operating depth. It is also possible to act on the hoisting means (16) comprised at the hanging points (13'), in the corresponding embodiments, to adjust the draft of the auxiliary vessel (7).

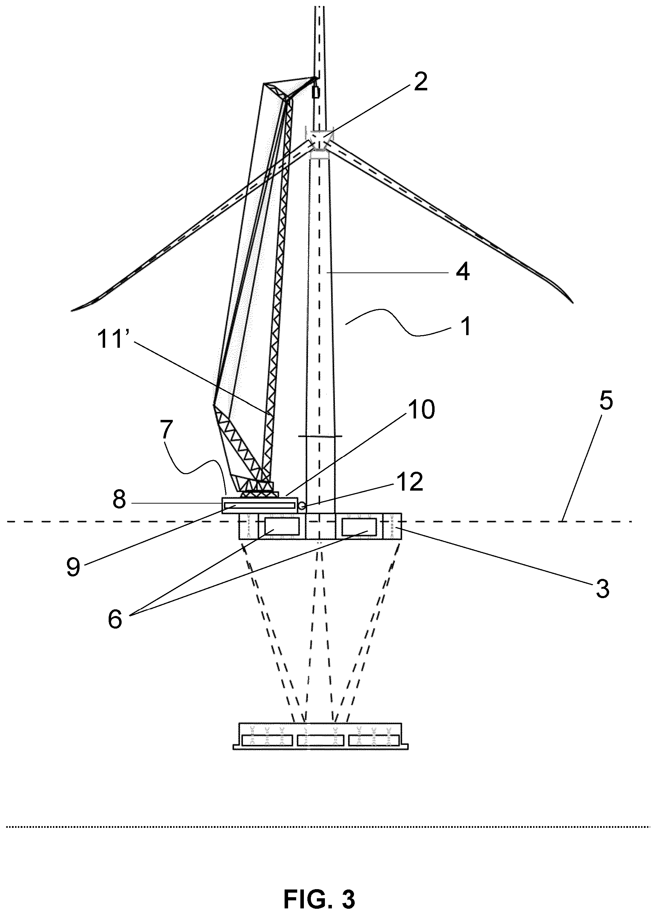

In all the embodiments mentioned, the relative vertical distance between the hull (3) of the offshore structure (1) and the auxiliary vessel (7) is reduced until there is a transmission of forces between both elements, either by bearing (bearing points (13)/support points (14)) or by suspension (hanging points (13')/support points (14)). In particular, there is a transmission of vertical force such that part of the weight of the auxiliary vessel (7) rests on the offshore structure (1). In this way, once there is a bearing or suspension, the force that the auxiliary vessel (7) exerts on the hull (3) of the offshore structure (1) is increased until the latter reaches, on a ten-minute average, a value equal to or greater than 10 tons, thereby achieving an integral or almost integral coupling between the auxiliary vessel (7) and the offshore structure (1) (Figure 3). In this case, the almost integral or integral coupling will be understood as a null or substantially null relative movement between the offshore structure (1) and the auxiliary vessel (7).

The integral attachment between the auxiliary vessel (7) and the offshore structure (1) allows eliminating or sufficiently limiting the relative movements between both, allowing maintenance and/or installation means (11) of said structure (1), such as cranes (11') or the components thereof (for example, a wind turbine (2)), to operate in a safe and stable manner. In this context, it should be understood that certain aspects such as the elastic deformation of the materials can result in small relative movements, without being outside of the scope of the invention.

After performing repairs or maintenance tasks, one or more inverse phases with respect to those described above are carried: first, the relative distance between the hull (3) and the auxiliary vessel (7) is increased by ballasting the hull (3) of the offshore structure (1), while at the same time that, optionally, the auxiliary vessel (7) is unballasted (in the event that same comprises tanks (9) or ballasting means) or the hoisting means (16) comprised in the hanging points (13') are acted on in order to separate them again, eliminating their integral coupling. In this way, the auxiliary vessel (7) is no longer borne (hanging) on (from) the hull (3) of the offshore structure (1) and again remains afloat, and it can therefore be towed or driven to land or to another offshore structure (1) which needs maintenance, the method of the invention thereby being completed. Said inverse process would correspond to examining Figures 1-3 in the inverse order by changing the direction of the arrows of Figure 2.

Figure 7 shows a plan view and an elevational view showing the configuration of the auxiliary vessel (7) once it is integrally coupled to the offshore structure (1) for performing maintenance tasks according to an embodiment of the invention. In this case, the offshore structure (1) has the wind turbine tower (4) supported by a transition part in the form of a tripod supported on the hull (3) having an annular configuration. There are four bearing points (13) borne on the corresponding four support points (14) in the hull (3). The support points (14) are appropriately located on reinforced areas or areas with a greater capacity in the hull (3) to suitably withstand the loads generated both during the approach and coupling process (steps d) and e)) and in the coupled condition (step f)). The support points (14) have a frustoconical shape so that once the auxiliary vessel (7) is borne on the hull (3), the bearing points (13) can transmit not only a vertical load but also horizontal loads. Likewise, the auxiliary vessel (7) comprises fenders (13') in the area of the bearing points (14) to limit the impact forces that may be generated during the approach of both floating bodies. Said fenders are preferably of the pneumatic type, are inflated before the approach operation (step d), and once they contact the hull (3), they can be deflated to facilitate a more rigid contact between the bearing point (13) and the support point (14). Other types of compressible non-pneumatic fenders known in the art can also be used in an equivalent manner.

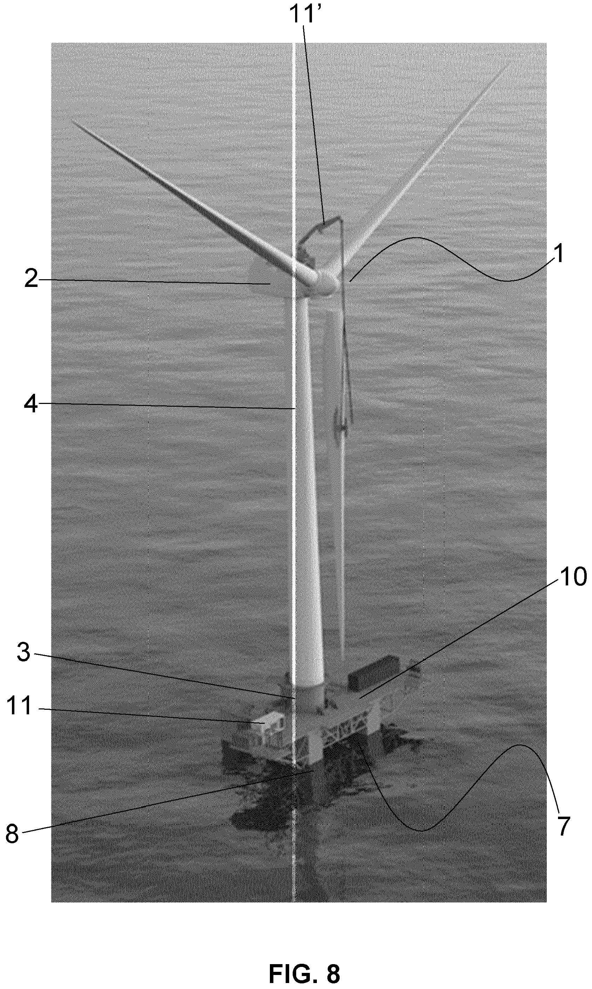

Figure 8 shows the process of performing said tasks in an embodiment of the invention in which the crane (11') is placed above the offshore structure (1) to carry out its operation, although part of the equipment for the operation of the crane can remain on the working platform (10).

## Claims

1. A method for the maintenance and/or installation of an offshore structure (1), wherein said offshore structure (1) is of the floating type and comprises a completely or partially submerged hull (3);
where said method comprises the operation of an auxiliary vessel (7) comprising:
- one or more floating elements (8);
- a working platform (10) positioned on at least one of said floating elements (8);
- maintenance and/or installation means (11) for said floating offshore structure (1);
- at least three points selected from bearing points (13) on the offshore structure (1) and hanging points (13') from the offshore structure (1);
said method being **characterized in that** it comprises performing the following steps:
a) selecting at least three support points (14) on the hull (3);
b) transferring the auxiliary vessel (7), in a floating manner, to a site where the offshore structure (1) is located;
c) positioning at least part of the auxiliary vessel (7) in the substantially vertical projection of at least part of the support points (14) of the hull (3);
d) reducing the relative vertical distance between the hull (3) and the auxiliary vessel (7) until:
- at least part of the bearing points (13) are borne on at least part of the support points (14), and/or
- at least part of the hanging points (13') are suspended from at least part of the support points (14);
e) increasing the contact and/or suspension force that the auxiliary vessel (7) exerts on said support points (14) until the downward vertical load that the auxiliary vessel (7) applies on the hull (3) reaches, on a ten-minute average, a value greater than 10 tons and the auxiliary vessel (7) and the hull (3) are coupled and move together in an integral manner in all degrees of freedom;
f) using the maintenance and/or installation means (11) to act on the offshore structure (1);
g) increasing the relative vertical distance between the submersible hull (3) and the auxiliary vessel (7) until the auxiliary vessel (7) stops transmitting a load at the support points (14) and the auxiliary vessel (7) and the hull (3) stop moving together in an integral manner; and
h) moving the auxiliary vessel (7), in a floating manner, away from the site where said offshore structure (1) is located.

2. The method according to the preceding claim, wherein the maximum horizontal distance between the bearing points (13) and/or hanging points (13') is more than 3 meters and wherein the maximum horizontal distance between support points is greater than 3 meters.

3. The method according to any of the preceding claims, wherein the hull (3) comprises one or more ballasting tanks (6), and wherein:
- step d) comprises removing ballast from said tanks (6) to reduce the draft of the hull (3); and/or
- step e) comprises removing ballast from said tanks (6) to increase the vertical force that the auxiliary vessel (7) exerts on the hull (3); and/or
- step g) comprises introducing ballast in said tanks (6) to increase the draft of the hull (3).

4. The method according to the preceding claim, wherein the momentum generated by the weight of the ballast transferred or removed from the ballasting tanks (6) of the hull (3) during steps d) and e) is essentially equal to the momentum caused by the vertical load that the auxiliary vessel (7) applies on the hull (3) in step e).

5. The method according to any of the preceding claims, wherein the auxiliary vessel (7) comprises one or more ballasting tanks (9), and wherein:
- step d) comprises introducing ballast in said tanks (9) to increase the draft of the auxiliary vessel (7); and/or
- step g) comprises removing ballast from said tanks (9) to reduce the draft of the auxiliary vessel (7).

6. The method according to any of the preceding claims, wherein at least part of the hanging points (13') of the auxiliary vessel (7) comprise hoisting means (16), and wherein
- step d) comprises acting on said hoisting means (16) to reduce the draft of the auxiliary vessel (7); and/or
- step g) comprises acting on said hoisting means (16) to increase the draft of the auxiliary vessel (7).

7. The method according to the preceding claim, wherein
- step d) comprises acting on the hoisting means (16) to take at least part of the floating elements (8) of the auxiliary vessel (7) completely out of the water; and/or
- step g) comprises acting on the hoisting means (16) to introduce at least part of the floating elements (8) of the auxiliary vessel (7) in the water.

8. The method according to any of the preceding claims, wherein the maintenance and/or installation means (11) comprise a crane (11') supported at least temporarily on the auxiliary vessel (7).

9. The method according to any of the preceding claims, wherein at least one bearing point (13) and/or support point (14) comprise securing means (15), and wherein said method further comprises, after step d) and before step f), step:
e1) engaging said securing means (15) to form a mechanical fixing between said bearing point (13) and said support point (14) such that both of them cannot be separated; and wherein said method further comprises, before step g), step
e2) disengaging said securing means (15) to allow the separation of said bearing point (13) and said support point (14).

10. The method according to any of the preceding claims, wherein at least one support point (14) of the hull (3) has a vertical axis frustoconical convex male geometry, and the bearing point (13) of the auxiliary vessel (7) borne on said support point (14) has a concave female geometry, or vice versa, and wherein:
- during step d) the frustoconical matching geometry of said support point or points (14) and bearing point or points (13) allows guiding the plan position of the auxiliary vessel (7) with respect to the hull (3);
- during steps e) and/or f) the matched geometry of the contact between said support point or points (14) and bearing point or points (13) allows the transmission of horizontal forces between the auxiliary vessel (7) and the hull (3) by direct contact.

11. The method according to any of the preceding claims, wherein the auxiliary vessel (7) is equipped with one or more cushioning means or fender (12), and wherein said cushioning means or fender (12) are arranged, during one or more of steps c)-g), between said auxiliary vessel (7) and the hull (3) of the offshore structure (1).

12. The method according to any of the preceding claims, wherein the auxiliary vessel (7) comprises at least one winch (17), and wherein step c) comprises the following sub-steps:
c1) connecting at least one cable of said winch (17) to the offshore structure (1);
c2) using the winch (17) to take up the cable or cables such that the auxiliary vessel (7) gradually approaches the hull (3).

13. The method according to claims 11 and 12, wherein step c) further comprises the following sub-steps:
c3) the auxiliary vessel (7) approaching the hull (3) until at least part of the cushioning means or fender (12) contact the hull (3);
c4) taking up the cable or cables with the winch (17) to increase the compression applied on at least part of the cushioning means or fender (12) positioned between the hull (3) and the auxiliary vessel (7).

14. The method according to the preceding claim, wherein during step c2) a second vessel is used to pull on the auxiliary vessel (7) in the direction opposite to the direction in which said auxiliary vessel (7) approaches the hull (3), keeping at least part of the cable(s) of the winch (17) tensed during at least part of the approach process.

15. The method according to any of the preceding claims, wherein at least one bearing point (13) of the auxiliary vessel (7) comprises a pneumatic fender (12') and wherein step d) comprises the following sub-steps:
d1) inflating said pneumatic fender (12');
d2) said bearing point (13) vertically approaching a support point (14) of the hull (3) until the pneumatic fender (12') contacts said support point (14);
d3) compressing and/or deflating said pneumatic fender (12') with the bearing point (13) continuing to approach the support point (14) in a controlled manner as the dimension of said pneumatic fender (12') decreases.

## Patentansprüche

1. Verfahren zur Wartung und/oder Installation einer Offshore-Struktur (1), wobei die Offshore-Struktur (1) vom schwimmenden Typ ist und einen vollständig oder teilweise untergetauchten Rumpf (3) umfasst;
wobei das Verfahren den Betrieb eines Hilfsschiffs (7) umfasst, das Folgendes umfasst:
- ein oder mehrere schwimmende Elemente (8);
- eine Arbeitsplattform (10), die auf mindestens einem der schwimmenden Elemente (8) positioniert ist;
- Wartungs- und/oder Installationsmittel (11) für die schwimmende Offshore-Struktur (1);
- mindestens drei Punkte, die aus Lagerpunkten (13) auf der Offshore-Struktur (1) und Aufhängepunkten (13') an der Offshore-Struktur (1) ausgewählt sind;
wobei das Verfahren **dadurch gekennzeichnet ist, dass** es das Durchführen der folgenden Schritte umfasst:
a) Auswählen von mindestens drei Stützpunkten (14) auf dem Rumpf (3);
b) Überführen des Hilfsschiffs (7) schwimmend zu einer Stelle, an der sich die Offshore-Struktur (1) befindet;
c) Positionieren mindestens eines Teils des Hilfsschiffs (7) in der im Wesentlichen vertikalen Projektion mindestens eines Teils der Stützpunkte (14) des Rumpfes (3);
d) Verringern der relativen vertikalen Entfernung zwischen dem Rumpf (3) und dem Hilfsschiff (7), bis:
- mindestens ein Teil der Lagerpunkte (13) auf mindestens einem Teil der Stützpunkte (14) aufliegt und/oder
- mindestens ein Teil der Aufhängepunkte (13') an mindestens einem Teil der Stützpunkte (14) aufgehängt ist;
e) Erhöhen der Kontakt- und/oder Aufhängungskraft, die das Hilfsschiff (7) auf die Stützpunkte (14) ausübt, bis die vertikale Abwärtslast, die das Hilfsschiff (7) auf den Rumpf (3) ausübt, im Zehn-Minuten-Durchschnitt einen Wert von mehr als 10 Tonnen erreicht und das Hilfsschiff (7) und der Rumpf (3) miteinander gekoppelt sind und sich in allen Freiheitsgraden integral zusammen bewegen;
f) Verwenden der Wartungs- und/oder Installationsmittel (11), um auf die Offshore-Struktur (1) einzuwirken;
g) Erhöhen der relativen vertikalen Entfernung zwischen dem tauchfähigen Rumpf (3) und dem Hilfsschiff (7), bis das Hilfsschiff (7) keine Last mehr auf die Stützpunkte (14) überträgt und das Hilfsschiff (7) und der Rumpf (3) sich nicht mehr integral zusammen bewegen; und
h) Bewegen des Hilfsschiffs (7) schwimmend von der Stelle weg, an der sich die Offshore-Struktur (1) befindet.

2. Verfahren nach dem vorhergehenden Anspruch, wobei die maximale horizontale Entfernung zwischen den Lagerpunkten (13) und/oder Aufhängepunkten (13') mehr als 3 Meter beträgt und wobei die maximale horizontale Entfernung zwischen Stützpunkten größer als 3 Meter ist.

3. Verfahren nach einem der vorhergehenden Ansprüche, wobei der Rumpf (3) einen oder mehrere Ballasttanks (6) umfasst, und wobei:
- Schritt d) das Entfernen von Ballast aus den Tanks (6) umfasst, um den Tiefgang des Rumpfes (3) zu verringern; und/oder
- Schritt e) das Entfernen von Ballast aus den Tanks (6) umfasst, um die vertikale Kraft zu erhöhen, die das Hilfsschiff (7) auf den Rumpf (3) ausübt; und/oder
- Schritt g) das Einführen von Ballast in die Tanks (6) umfasst, um den Tiefgang des Rumpfes (3) zu erhöhen.

4. Verfahren nach dem vorhergehenden Anspruch, wobei der Impuls, der durch das Gewicht des Ballasts generiert wird, der während der Schritte d) und e) aus den Ballasttanks (6) des Rumpfes (3) übertragen oder entfernt wird, im Wesentlichen gleich dem Impuls ist, der durch die vertikale Last verursacht wird, die das Hilfsschiff (7) in Schritt e) auf den Rumpf (3) ausübt.

5. Verfahren nach einem der vorhergehenden Ansprüche, wobei das Hilfsschiff (7) einen oder mehrere Ballasttanks (9) umfasst, und wobei:
- Schritt d) das Einführen von Ballast in die Tanks (9) umfasst, um den Tiefgang des Hilfsschiffs (7) zu erhöhen; und/oder
- Schritt g) das Entfernen von Ballast aus den Tanks (9) umfasst, um den Tiefgang des Hilfsschiffs (7) zu verringern.

6. Verfahren nach einem der vorhergehenden Ansprüche, wobei mindestens ein Teil der Aufhängepunkte (13') des Hilfsschiffs (7) Hebemittel (16) umfasst, und wobei
- Schritt d) das Einwirken auf die Hebemittel (16) umfasst, um den Tiefgang des Hilfsschiffs (7) zu verringern; und/oder
- Schritt g) das Einwirken auf die Hebemittel (16) umfasst, um den Tiefgang des Hilfsschiffs (7) zu erhöhen.

7. Verfahren nach dem vorhergehenden Anspruch, wobei
- Schritt d) das Einwirken auf die Hebemittel (16) umfasst, um mindestens einen Teil der schwimmenden Elemente (8) des Hilfsschiffs (7) vollständig aus dem Wasser zu heben; und/oder
Schritt g) das Einwirken auf die Hebemittel (16) umfasst, um mindestens einen Teil der schwimmenden Elemente (8) des Hilfsschiffs (7) ins Wasser einzuführen.

8. Verfahren nach einem der vorhergehenden Ansprüche, wobei die Wartungs- und/oder Installationsmittel (11) einen Kran (11') umfassen, der mindestens vorübergehend auf dem Hilfsschiff (7) abgestützt ist.

9. Verfahren nach einem der vorhergehenden Ansprüche, wobei mindestens ein Lagerpunkt (13) und/oder Stützpunkt (14) Befestigungsmittel (15) umfasst, und wobei das Verfahren nach Schritt d) und vor Schritt f) den folgenden Schritt umfasst:
e1) Einrasten der Befestigungsmittel (15), um eine mechanische Fixierung zwischen dem Lagerpunkt (13) und dem Stützpunkt (14) zu bilden, so dass beide nicht voneinander getrennt werden können; und wobei das Verfahren vor Schritt g) den folgenden Schritt umfasst:
e2) Lösen der Befestigungsmittel (15), um die Trennung des Lagerpunkts (13) und des Stützpunkts (14) zu ermöglichen.

10. Verfahren nach einem der vorhergehenden Ansprüche, wobei mindestens ein Stützpunkt (14) des Rumpfes (3) eine vertikalachsige kegelstumpfförmige konvexe Steckgeometrie aufweist und der Lagerpunkt (13) des Hilfsschiffs (7), das auf diesem Stützpunkt (14) aufliegt, eine konkave Aufnahmegeometrie aufweist oder umgekehrt, und wobei:
- während Schritt d) die kegelstumpfförmige Passgeometrie des oder der Stützpunkte (14) und des oder der Lagerpunkte (13) die Führung der Planposition des Hilfsschiffs (7) in Bezug auf den Rumpf (3) ermöglicht;
- während der Schritte e) und/oder f) die angepasste Geometrie des Kontakts zwischen dem oder den Stützpunkten (14) und dem oder den Lagerpunkten (13) die Übertragung horizontaler Kräfte zwischen dem Hilfsschiff (7) und dem Rumpf (3) durch direkten Kontakt ermöglicht.

11. Verfahren nach einem der vorhergehenden Ansprüche, wobei das Hilfsschiff (7) mit einer oder mehreren Dämpfungsmitteln oder Fendern (12) ausgestattet ist und wobei die Dämpfungsmittel oder Fender (12) während eines oder mehrerer der Schritte c) - g) zwischen dem Hilfsschiff (7) und dem Rumpf (3) der Offshore-Struktur (1) angeordnet sind.

12. Verfahren nach einem der vorhergehenden Ansprüche, wobei das Hilfsschiff (7) mindestens eine Winde (17) umfasst und wobei Schritt c) die folgenden Teilschritte umfasst:
c1) Verbinden mindestens eines Kabels der Winde (17) mit der Offshore-Struktur (1);
c2) Verwenden der Winde (17), um das oder die Kabel so aufzunehmen, dass sich das Hilfsschiff (7) allmählich dem Rumpf (3) nähert.

13. Verfahren nach Anspruch 11 und 12, wobei Schritt c) ferner die folgenden Teilschritte umfasst:
c3) Anfahren des Hilfsschiffs (7) an den Rumpf (3), bis mindestens ein Teil der Dämpfungsmittel oder des Fenders (12) mit dem Rumpf (3) in Kontakt kommt;
c4) Aufnehmen des oder der Kabel mit der Winde (17), um den Druck auf mindestens einen Teil der Dämpfungsmittel oder des Fenders (12) zu erhöhen, die bzw. der zwischen dem Rumpf (3) und dem Hilfsschiff (7) positioniert ist.

14. Verfahren nach dem vorhergehenden Anspruch, wobei während Schritt c2) ein zweites Schiff verwendet wird, um das Hilfsschiff (7) in die entgegengesetzte Richtung zu ziehen, in der sich das Hilfsschiff (7) dem Rumpf (3) nähert, wobei mindestens ein Teil des Kabels/der Kabel der Winde (17) während mindestens eines Teils des Annäherungsvorgangs gespannt bleibt.

15. Verfahren nach einem der vorhergehenden Ansprüche, wobei mindestens ein Lagerpunkt (13) des Hilfsschiffs (7) einen pneumatischen Fender (12') umfasst und wobei Schritt d) die folgenden Teilschritte umfasst:
d1) Aufblasen des pneumatischen Fenders (12');
d2) vertikales Annähern des Lagerpunkts (13) an einen Stützpunkt (14) des Rumpfes (3), bis der pneumatische Fender (12') mit dem Stützpunkt (14) in Kontakt kommt;
d3) Zusammendrücken und/oder Entleeren des pneumatischen Fenders (12'), wobei sich der Lagerpunkt (13) weiterhin kontrolliert dem Stützpunkt (14) nähert, während sich die Abmessung des pneumatischen Fenders (12') verringert.

## Revendications

1. Procédé pour la maintenance et/ou l'installation d'une structure offshore (1), ladite structure offshore (1) étant du type flottant et comprenant une coque (3) complètement ou partiellement immergée ;
ledit procédé comprenant l'exploitation d'un navire auxiliaire (7) comprenant :
- un ou plusieurs éléments flottants (8) ;
- une plateforme de travail (10) positionnée sur au moins un desdits éléments flottants (8) ;
- des moyens de maintenance et/ou d'installation (11) pour ladite structure offshore flottante (1) ;
- au moins trois points choisis parmi des points d'appui (13) sur la structure offshore (1) et des points de suspension (13') depuis la structure offshore (1) ;
ledit procédé étant **caractérisé en ce qu'**il comprend l'exécution des étapes suivantes :
a) sélectionner au moins trois points de support (14) sur la coque (3) ;
b) transférer le navire auxiliaire (7), de manière flottante, vers un site où la structure offshore (1) est située ;
c) positionner au moins une partie du navire auxiliaire (7) dans la projection sensiblement verticale d'au moins une partie des points de support (14) de la coque (3) ;
d) réduire la distance verticale relative entre la coque (3) et le navire auxiliaire (7) jusqu'à ce que :
- au moins une partie des points d'appui (13) reposent sur au moins une partie des points de support (14), et/ou
- au moins une partie des points de suspension (13') soient suspendus à au moins une partie des points de support (14) ;
e) augmenter la force de contact et/ou de suspension que le navire auxiliaire (7) exerce sur lesdits points de support (14) jusqu'à ce que la charge verticale descendante que le navire auxiliaire (7) applique sur la coque (3) atteigne, en moyenne sur dix minutes, une valeur supérieure à 10 tonnes et que le navire auxiliaire (7) et la coque (3) soient couplés et se déplacent ensemble de manière solidaire dans tous les degrés de liberté ;
f) utiliser les moyens de maintenance et/ou d'installation (11) pour agir sur la structure offshore (1) ;
g) augmenter la distance verticale relative entre la coque submersible (3) et le navire auxiliaire (7) jusqu'à ce que le navire auxiliaire (7) cesse de transmettre une charge aux points de support (14) et que le navire auxiliaire (7) et la coque (3) cessent de se déplacer ensemble de manière solidaire ; et
h) déplacer le navire auxiliaire (7), de manière flottante, à l'écart du site où ladite structure offshore (1) est située.

2. Procédé selon la revendication précédente, dans lequel la distance horizontale maximale entre les points d'appui (13) et/ou les points de suspension (13') est supérieure à 3 mètres et dans lequel la distance horizontale maximale entre les points de support est supérieure à 3 mètres.

3. Procédé selon l'une quelconque des revendications précédentes, dans lequel la coque (3) comprend un ou plusieurs réservoirs de ballastage (6), et dans lequel :
- l'étape d) comprend le retrait de ballast desdits réservoirs (6) afin de réduire le tirant d'eau de la coque (3) ; et/ou
- l'étape e) comprend le retrait de ballast desdits réservoirs (6) afin d'augmenter la force verticale que le navire auxiliaire (7) exerce sur la coque (3) ; et/ou
- l'étape g) comprend l'introduction de ballast dans lesdits réservoirs (6) afin d'augmenter le tirant d'eau de la coque (3).

4. Procédé selon la revendication précédente, dans lequel le moment généré par le poids du ballast transféré ou retiré des réservoirs de ballastage (6) de la coque (3) pendant les étapes d) et e) est essentiellement égal au moment provoqué par la charge verticale que le navire auxiliaire (7) applique sur la coque (3) à l'étape e).

5. Procédé selon l'une quelconque des revendications précédentes, dans lequel le navire auxiliaire (7) comprend un ou plusieurs réservoirs de ballastage (9), et dans lequel :
l'étape d) comprend l'introduction de ballast dans lesdits réservoirs (9) afin d'augmenter le tirant d'eau du navire auxiliaire (7) ; et/ou
- l'étape g) comprend le retrait de ballast desdits réservoirs (9) afin de réduire le tirant d'eau du navire auxiliaire (7).

6. Procédé selon l'une quelconque des revendications précédentes, dans lequel au moins une partie des points de suspension (13') du navire auxiliaire (7) comprend des moyens de levage (16), et dans lequel
- l'étape d) comprend l'actionnement desdits moyens de levage (16) afin de réduire le tirant d'eau du navire auxiliaire (7) ; et/ou
- l'étape g) comprend l'actionnement desdits moyens de levage (16) afin d'augmenter le tirant d'eau du navire auxiliaire (7).

7. Procédé selon la revendication précédente, dans lequel
- l'étape d) comprend l'actionnement des moyens de levage (16) afin de sortir au moins une partie des éléments flottants (8) du navire auxiliaire (7) complètement hors de l'eau ; et/ou
- l'étape g) comprend l'actionnement des moyens de levage (16) afin d'introduire au moins une partie des éléments flottants (8) du navire auxiliaire (7) dans l'eau.

8. Procédé selon l'une quelconque des revendications précédentes, dans lequel les moyens de maintenance et/ou d'installation (11) comprennent une grue (11') supportée au moins temporairement par le navire auxiliaire (7).

9. Procédé selon l'une quelconque des revendications précédentes, dans lequel au moins un point d'appui (13) et/ou point de support (14) comprend des moyens de fixation (15), et dans lequel ledit procédé comprend en outre, après l'étape d) et avant l'étape f), l'étape :
e1) engager lesdits moyens de fixation (15) afin de former une liaison mécanique entre ledit point d'appui (13) et ledit point de support (14) de sorte qu'ils ne puissent pas être séparés ; et dans lequel ledit procédé comprend en outre, avant l'étape g), l'étape
e2) désengager lesdits moyens de fixation (15) afin de permettre la séparation dudit point d'appui (13) et dudit point de support (14).

10. Procédé selon l'une quelconque des revendications précédentes, dans lequel au moins un point de support (14) de la coque (3) présente une géométrie mâle convexe tronconique à axe vertical, et le point d'appui (13) du navire auxiliaire (7) reposant sur ledit point de support (14) présente une géométrie femelle concave, ou inversement, et dans lequel :
lors de l'étape d), la géométrie tronconique correspondante dudit ou desdits points de support (14) et dudit ou desdits points d'appui (13) permet de guider la position en plan du navire auxiliaire (7) par rapport à la coque (3) ;
lors des étapes e) et/ou f), la géométrie correspondante du contact entre ledit ou lesdits points de support (14) et ledit ou lesdits points d'appui (13) permet la transmission de forces horizontales entre le navire auxiliaire (7) et la coque (3) par contact direct.

11. Procédé selon l'une quelconque des revendications précédentes, dans lequel le navire auxiliaire (7) est équipé d'un ou plusieurs moyens d'amortissement ou défenses (12), et dans lequel lesdits moyens d'amortissement ou défenses (12) sont agencés, pendant une ou plusieurs des étapes c) à g), entre ledit navire auxiliaire (7) et la coque (3) de la structure offshore (1).

12. Procédé selon l'une quelconque des revendications précédentes, dans lequel le navire auxiliaire (7) comprend au moins un treuil (17), et dans lequel l'étape c) comprend les sous-étapes suivantes :
c1) connecter au moins un câble dudit treuil (17) à la structure offshore (1) ;
c2) utiliser le treuil (17) pour haler le ou les câbles de sorte que le navire auxiliaire (7) se rapproche progressivement de la coque (3).

13. Procédé selon les revendications 11 et 12, dans lequel l'étape c) comprend en outre les sous-étapes suivantes :
c3) le navire auxiliaire (7) se rapprochant de la coque (3) jusqu'à ce qu'au moins une partie des moyens d'amortissement ou défenses (12) entre en contact avec la coque (3) ;
c4) haler le ou les câbles avec le treuil (17) afin d'augmenter la compression appliquée sur au moins une partie des moyens d'amortissement ou défenses (12) positionnés entre la coque (3) et le navire auxiliaire (7).

14. Procédé selon la revendication précédente, dans lequel, lors de l'étape c2), un second navire est utilisé pour tirer sur le navire auxiliaire (7) dans la direction opposée à la direction dans laquelle ledit navire auxiliaire (7) se rapproche de la coque (3), en maintenant au moins une partie du ou des câbles du treuil (17) tendue pendant au moins une partie du processus de rapprochement.

15. Procédé selon l'une quelconque des revendications précédentes, dans lequel au moins un point d'appui (13) du navire auxiliaire (7) comprend une défense pneumatique (12') et dans lequel l'étape d) comprend les sous-étapes suivantes :
d1) gonfler ladite défense pneumatique (12') ;
d2) ledit point d'appui (13) se rapprochant verticalement d'un point de support (14) de la coque (3) jusqu'à ce que la défense pneumatique (12') entre en contact avec ledit point de support (14) ;
d3) comprimer et/ou dégonfler ladite défense pneumatique (12'), le point d'appui (13) continuant à se rapprocher du point de support (14) de manière contrôlée à mesure que la dimension de ladite défense pneumatique (12') diminue.
